# FASCICULE DE BREVET EUROPEEN

(11) **EP 2 869 586 B1**
(45) Date de publication et mention de la délivrance du brevet: **04.07.2018**
(21) Numéro de dépôt: 14190104.1
(22) Date de dépôt: 23.10.2014
(51) Int. Cl.: H04N 21/431, H04N 21/433, H04N 21/4725

(54) **Procédé de traitement d'au moins un contenu audiovisuel supplémentaire, dispositif et programme d'ordinateur associés**
Verarbeitungsverfahren mindestens eines zusätzlichen audiovisuellen Inhalts, entsprechende Vorrichtung und entsprechendes Computerprogramm
Method for processing at least one additional audiovisual content, related device and computer program

(30) Priorité: 29.10.2013 FR 1360565
(43) Date de publication de la demande: 06.05.2015
(73) Titulaire: Orange, 75015 Paris (FR)
(72) Inventeur: Cochet, Jérome, 35520 MELESSE (FR); Collet, Jean-Francois, 35700 RENNES (FR)
(74) Mandataire: Vidon Brevets & Stratégie

(56) Documents cités:
- US-A1- 2004 139 469
- US-A1- 2010 262 986

## Description

### 1. Domaine de l'invention

Le domaine de l'invention est celui des interfaces multimédia, plus particulièrement d'une interface multimédia mise en oeuvre par un deuxième équipement terminal d'un utilisateur, accessoire d'un premier équipement terminal, apte à restituer des programmes audiovisuels diffusés.

### 2. Présentation de l'art antérieur

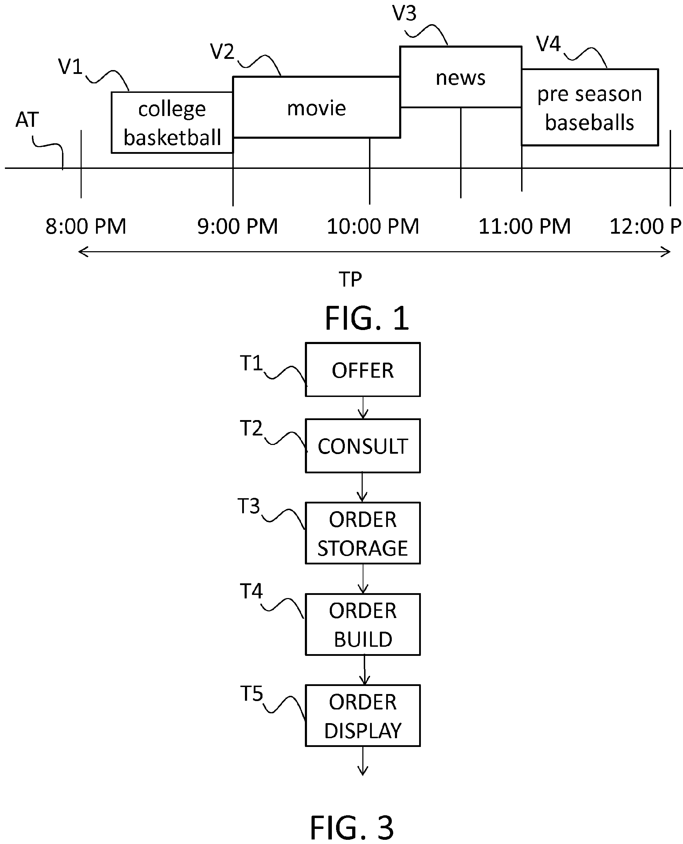

On connait du document US 2010/0262986 une méthode de stockage d'informations de description de programmes TV pendant leur restitution sur l'écran TV d'un utilisateur et d'affichage d'une interface TV comprenant les informations stockées. En relation avec la Fig. 1, on a représenté une telle interface TV, sous forme d'un axe temporel AT (« timeline », en anglais) permettant à cet utilisateur de visualiser un historique de sa consommation TV pendant une période temporelle prédéterminée. Dans cet exemple, la période temporelle représentée correspond à une soirée entre 20H et minuit. Les programmes TV visualisés par l'utilisateur sont représentés sous forme de vignettes sélectionnables V1 à V4. Ces vignettes sont placées sur l'axe temporel AT en fonction de leur horaire de diffusion. En sélectionnant une vignette, l'utilisateur accède à des informations de description du programme TV correspondant, par exemple son titre, les acteurs, le genre ou plus généralement des métadonnées représentatives de la consommation TV. Il peut aussi accéder à des informations statistiques, telles qu'un pourcentage d'un genre particulier de programmes. D'autres types de représentations que la représentation temporelle, par exemple une représentation par menu sont proposées.

### 3. Inconvénients de l'art antérieur

Aujourd'hui les usages de téléspectateurs ont évolué. En même temps qu'il regarde la télévision, un utilisateur est de plus en plus souvent connecté au réseau Internet par l'intermédiaire d'un deuxième équipement terminal, par exemple de type tablette ou terminal intelligent (« smartphone », en anglais), que l'on désigne généralement par le terme de « second écran » ou de terminal « compagnon ». Les fournisseurs de programme TV et les chaînes TV proposent déjà des applications logicielles à charger sur ce deuxième équipement terminal qui lui permet de pousser vers l'utilisateur des contenus supplémentaires associés à un contenu principal en cours de diffusion sur l'écran de télévision. Il s'agit par exemple d'informations sur les acteurs, de pages web thématiques en lien avec le contenu principal ou encore de liens commerciaux.

L'utilisateur est donc incité à visualiser plusieurs contenus supplémentaires tout en suivant le contenu principal à la télévision. L'historique de sa consommation TV ne lui permet pas de retrouver les contenus supplémentaires qu'il a consultés en parallèle en lien avec le contenu TV principal, sur son deuxième équipement terminal.

On connaît de la demande de brevet publiée sous le numéro US2004/0139469 une méthode et un système permettant à un téléspectateur d'accéder à du contenu supplémentaire en lien avec le programme diffusé sur son téléviseur, sur un deuxième terminal.

Pendant la retransmission du programme, l'utilisateur entre sur son deuxième terminal l'identifiant de la chaîne qu'il regarde à la télévision puis sélectionne un ou plusieurs thèmes d'intérêt afin d'accéder, immédiatement ou plus tard, à du contenu supplémentaire relatif à ces thèmes. Le système est basé sur une synchronisation des heures locales des différents équipements mis en oeuvre (émetteur, récepteur, serveur distant, deuxième terminal) à partir d'une heure universelle telle que l'heure fournie par le système de géolocalisation GPS (pour « Global Positioning System ») et sur l'association d'un ou plusieurs hyperliens à un identifiant du programme diffusé pour une période temporelle donnée. L'identifiant du programme, les hyper liens et la période temporelle sont stockés en mémoire dans une table UTT (« Universal Time Table ») d'un serveur distant. Pendant cette période temporelle les hyperliens restent actifs et peuvent être consultés.

### 4. Objectifs de l'invention

L'invention a notamment pour objectif de pallier ces inconvénients de l'art antérieur. Plus précisément, un objectif de l'invention est de fournir une nouvelle interface, adaptée à un deuxième équipement terminal de l'utilisateur, à partir de laquelle il pourra retrouver le parcours de consultation qu'il aura suivi sur son second écran, pendant une période de consommation TV prédéterminée, par exemple une soirée.

### 5. Exposé de l'invention

Ces objectifs, ainsi que d'autres qui apparaîtront par la suite, sont atteints à l'aide d'un procédé de traitement d'au moins un contenu supplémentaire associé à un contenu multimédia principal en cours de restitution sur un écran d'un premier équipement terminal, ledit procédé comprenant une étape de mise à disposition de l'utilisateur dudit au moins contenu supplémentaire sous la forme d'une zone d'intérêt sélectionnable affichée sur un écran d'un deuxième équipement terminal pendant la restitution du contenu principal et, sur sélection par l'utilisateur de la zone d'intérêt représentative dudit contenu supplémentaire, une étape de consultation dudit contenu supplémentaire sur l'écran du deuxième équipement terminal.

Le procédé de traitement selon l'invention est particulier en ce qu'il comprend les étapes suivantes :
- commande de stockage d'un enregistrement relatif à la consultation dudit contenu supplémentaire, ledit enregistrement comprenant au moins un identifiant du contenu supplémentaire, une adresse dudit contenu supplémentaire, un identifiant du contenu principal associé, un parcours de consultation et un instant de référence ;
- commande d'affichage d'une représentation du parcours de consultation de l'utilisateur pendant une période temporelle prédéterminée, ladite représentation comprenant des zones d'intérêt sélectionnables, représentatives des contenus supplémentaires associés aux enregistrements stockés comprenant un instant de référence inclus dans la période temporelle prédéterminée, une zone d'intérêt étant étiquetée avec une information représentative du contenu principal auquel elle est
Avec l'invention, l'utilisateur peut visualiser son parcours de consultation de contenus supplémentaires pendant une période de son choix, par exemple une soirée, une semaine, un mois, sous la forme d'une représentation graphique interactive. Cette représentation constitue bien plus qu'un simple historique des contenus qu'il a consommés sur son deuxième équipement terminal, du fait qu'elle relie les contenus supplémentaires consultés aux programmes TV dont ils sont l'accessoire.

L'invention propose ainsi une approche tout-à-fait nouvelle et inventive basée sur le stockage et l'exploitation du lien qui existe entre le programme TV consommé par un utilisateur sur son téléviseur et les contenus accessoires qu'il a consultés sur son deuxième écran pendant la diffusion de ce programme.

Selon l'invention, l'association entre contenu supplémentaire et contenu principal est stockée en mémoire et le contenu supplémentaire est relié au contenu principal sur la représentation du parcours de consultation.

Le fait de mettre en évidence ce lien entre le programme TV et le ou les contenus supplémentaires consultés aide l'utilisateur à retrouver l'information qu'il recherche, du fait que sa propre mémoire a généralement conservé un souvenir au moins partiel de cette association.

Plusieurs représentations d'un tel lien sémantique peuvent être envisagées. Par exemple, on peut le représenter sous la forme d'un fil reliant les zones d'intérêt des contenus supplémentaires à l'étiquette du contenu principal.

Selon un aspect de l'invention, les zones d'intérêt de contenus supplémentaires étiquetées avec une information représentative d'un même contenu principal sont regroupées dans une même région d'intérêt de ladite représentation.

Un avantage de regrouper les vignettes des contenus supplémentaires associées à un même contenu principal dans une même région d'intérêt de la représentation graphique est que l'utilisateur retrouve en un seul coup d'oeil tout ce qu'il a consulté pendant la diffusion de ce contenu principal.

Selon un autre aspect de l'invention, les zones d'intérêt de contenus supplémentaires consultés sont disposées le long d'un axe temporel représentatif de la période temporelle prédéterminée, selon un ordre fonction de l'instant de référence associé audit contenu supplémentaire.

Les zones d'intérêt représentatives des contenus supplémentaires consultés sont rangées selon leur instant de consultation associé. Le parcours de consultation affiché prend la forme d'un fil d'Ariane le long duquel l'utilisateur retrouve la chronologie de ses consultations pendant la période temporelle choisie.

Selon un autre aspect de l'invention, un contenu supplémentaire est associé à une métadonnée et la mise à disposition du contenu supplémentaire sur le deuxième équipement terminal est déclenchée suite à la détection d'une occurrence de ladite métadonnée au cours de la restitution du contenu principal sur le premier équipement terminal. En outre, l'enregistrement stocké comprend ladite métadonnée et l'étape d'affichage comprend l'étiquetage d'une zones d'intérêt avec une information représentative de la métadonnée à laquelle elle est associée.En plus du lien avec le contenu principal, un contenu supplémentaire est associé à une métadonnée particulière caractérisant une partie du contenu principal (exemple : une entité nommée diffusée à un moment du programme TV). Ce lien sémantique est mis en évidence sur la représentation graphique du parcours de consultation de l'utilisateur, ce qui lui permet de suivre le fil de tous les contenus supplémentaires qu'il a consultés en lien avec cette métadonnée. Cet aspect est particulièrement intéressant lorsqu'il recherche des informations sur un thème particulier.

Selon un autre aspect de l'invention, l'instant de référence appartient à un groupe comprenant au moins :
- un instant de début du contenu principal ;
- Un instant de fin du contenu principal ;
- Un instant de mise à disposition du contenu supplémentaire ;
- un instant de consultation du contenu supplémentaire.

L'instant de référence associé au contenu supplémentaire peut être choisi de différentes manières, qui permettent de le relier à un contenu principal plus ou moins finement.

Par exemple, si on choisit l'instant de référence égal à l'instant de début de diffusion du contenu principal, on associe globalement ce contenu supplémentaire au contenu principal. En revanche, si on choisit l'instant de référence égal à l'instant de mise à disposition du contenu supplémentaire ou à l'instant de consultation du contenu supplémentaire par l'utilisateur, on peut associer cet instant de référence à un évènement particulier du contenu principal, pourvu qu'on dispose d'une description assez fine de ce contenu principal pour en définir les bornes temporelles. Ces bornes peuvent être par exemple obtenues à partir d'un chapitrage ou d'informations de description temporelles du contenu principal fournies par exemple par l'EPG (« Electronic Program Guide », en anglais) ou encore par analyse sémantique du sujet abordé. Ainsi, on peut associer le contenu supplémentaire à un chapitre particulier du contenu principal, ou encore à un reportage particulier d'un programme de reportages et enrichir la représentation du parcours de consultation de l'utilisateur.

Selon un autre aspect de l'invention, le groupe comprend en outre un instant d'occurrence de ladite au moins une métadonnée déclencheuse du contenu supplémentaire.

Lorsque la mise à disposition du contenu supplémentaire est déclenchée par l'occurrence d'une métadonnée particulière dans le contenu principal, la représentation graphique, en affichant l'instant de référence correspondant à cet instant de déclenchement, restitue non seulement le lien sémantique, mais aussi le lien temporel entre le contenu supplémentaire consulté et la métadonnée déclencheuse. Cet instant de référence est par exemple une indication horaire absolue (« time stamp », en anglais).

Selon un autre aspect de l'invention, ladite au moins une métadonnée appartient à un groupe thématique comprenant une pluralité de métadonnées, l'étape de commande de stockage comprend le stockage d'un identifiant dudit groupe thématique dans l'enregistrement et l'étape d'affichage comprend l'étiquetage des zones d'intérêt associées à des métadonnées d'un même groupe thématique avec une information représentative de ce groupe puis le regroupement des zones d'intérêt de contenus supplémentaires associés à un même thème dans une même région d'intérêt de la représentation.

Un regroupement par thème est particulièrement intéressant lorsque la période temporelle de consultation est longue, car il peut être plus facile d'accéder aux contenus supplémentaires consultés par thème que de façon chronologique par exemple.

Selon un autre aspect de l'invention, l'enregistrement comprend en outre un identifiant de l'utilisateur.

Ce champ supplémentaire est particulièrement avantageux lorsque le stockage commandé est un stockage distant.

Selon encore un autre aspect de l'invention, le procédé comprend une étape d'obtention d'enregistrements relatifs à la consultation par d'autres utilisateurs pendant la période temporelle prédéterminée d'autres contenus supplémentaires associés aux mêmes contenus principaux, dits contenus supplémentaires recommandés et en ce que l'étape d'affichage comprend l'insertion dans la représentation de zones d'intérêt correspondant auxdits contenus supplémentaires recommandés.

L'utilisateur accède à d'autres contenus supplémentaires que ceux qu'il a lui-même consultés. Son parcours de consultation est ainsi enrichi par les consultations d'autres utilisateurs. Un cas d'usage est la recommandation d'autres contenus supplémentaires consultés par un grand nombre d'utilisateurs du service. Avantageusement, cette recommandation est intégrée à la représentation du parcours de consultation de l'utilisateur, de telle façon qu'il fasse la différence entre ce qu'il a lui-même consulté et ce qu'on lui recommande.

Selon un autre aspect de l'invention, l'utilisateur appartient à au moins une communauté d'utilisateurs et les enregistrements relatifs à la consultation de contenus supplémentaires recommandés sont associés à des utilisateurs desdites au moins une communauté. L'utilisateur accède aux parcours de consultation des utilisateurs de ses communautés (en référence aux nombreux réseaux « sociaux » qu'il intègre), qui partagent donc ses goûts.

Le procédé de traitement qui vient d'être présenté dans ses différents modes de réalisation peut être mis en oeuvre par un dispositif de traitement d'au moins un contenu supplémentaire selon l'invention.

L'invention concerne donc un dispositif de traitement d'au moins un contenu supplémentaire associé à un contenu multimédia principal en cours de restitution sur un écran d'un premier équipement terminal, comprenant une unité de mise à disposition de l'utilisateur d'au moins contenu supplémentaire sous la forme d'une zone d'intérêt sélectionnable affichée sur un écran d'un deuxième équipement terminal pendant la restitution du contenu principal, ledit dispositif comprenant une unité de consultation d'un contenu supplémentaire mis à disposition sur l'écran du deuxième équipement terminal apte à être mis en oeuvre sur sélection par l'utilisateur de la zone d'intérêt représentative dudit contenu supplémentaire.

Le dispositif selon l'invention est particulier en ce qu'il comprend en outre les unités suivantes :
- commande de stockage d'un enregistrement relatif à la consultation d'un contenu supplémentaire, ledit enregistrement comprenant au moins un identifiant du contenu supplémentaire, une adresse dudit contenu supplémentaire, un identifiant du contenu principal associé, un parcours audiovisuel de l'utilisateur et un instant de référence ;
- commande d'affichage d'une représentation du parcours audiovisuel de l'utilisateur pendant la période temporelle prédéterminée, ladite représentation comprenant des zones d'intérêt sélectionnables, représentatives des contenus supplémentaires associés aux enregistrements stockés comprenant un instant de référence inclus dans la période temporelle prédéterminée, une zone d'intérêt étant étiquetée avec une information représentative du contenu principal auquel elle est associée.

Un tel dispositif peut être intégré à un équipement terminal selon l'invention.

Un tel équipement terminal comprend un écran, un module de connexion à un réseau de télécommunication. Il est particulier en ce qu'il comprend en outre le dispositif de traitement d'un contenu supplémentaire selon l'invention, qui vient d'être décrit.

L'invention concerne encore un programme d'ordinateur comportant des instructions pour la mise en oeuvre d'un procédé de traitement tel que décrit précédemment, lorsque ce programme est exécuté par un processeur. Un tel programme peut utiliser n'importe quel langage de programmation. Il peut être téléchargé depuis un réseau de communication et/ou enregistré sur un support lisible par ordinateur.

L'invention se rapporte enfin à des supports d'enregistrement, lisibles par un processeur, intégrés ou non au dispositif de traitement selon l'invention, éventuellement amovible, mémorisant respectivement un programme d'ordinateur mettant en oeuvre un procédé de traitement, tels que décrits précédemment.

Les supports d'enregistrement mentionnés ci-avant peuvent être n'importe quelle entité ou dispositif capable de stocker le programme et lisible par un équipement terminal. Par exemple, les supports peuvent comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, les supports d'enregistrement peuvent correspondre à un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

### 6. Liste des figures

D'autres avantages et caractéristiques de l'invention apparaîtront plus clairement à la lecture de la description suivante d'un mode de réalisation particulier de l'invention, donné à titre de simple exemple illustratif et non limitatif, et des dessins annexés, parmi lesquels :
- la figure **1**, déjà présentée, illustre un exemple de représentation d'un parcours de consommation TV d'un utilisateur selon l'art antérieur ;
- la figure **2** présente de façon schématique un exemple de système de traitement d'au moins un contenu supplémentaire selon un mode de réalisation de l'invention ;
- la figure **3** présente de façon schématique les étapes d'un procédé de traitement d'au moins un contenu supplémentaire associé à un contenu principal selon un mode de réalisation de l'invention ;
- la figure **4** illustre de façon schématique un exemple de format d'enregistrement d'un contenu supplémentaire selon un mode de réalisation de l'invention ;
- la figure **5** illustre de façon schématique un exemple de représentation graphique d'un parcours de consultation de contenus supplémentaires d'un utilisateur selon un premier mode de réalisation de l'invention ;
- la figure **6** illustre de façon schématique un exemple de représentation graphique d'un parcours de consultation de contenus supplémentaires d'un utilisateur selon un deuxième mode de réalisation de l'invention ;
- la figure **7** illustre de façon schématique un exemple de représentation graphique d'un parcours de consultation de contenus supplémentaires d'un utilisateur selon un troisième mode de réalisation de l'invention ;
- la figure 8 illustre de façon schématique un exemple de représentation graphique d'un parcours de consultation de contenus supplémentaires d'un utilisateur selon un quatrième mode de réalisation de l'invention et
- la figure **9** illustre de façon schématique un exemple de structure simplifiée d'un dispositif de traitement d'au moins un contenu supplémentaire associé à un contenu principal selon l'invention.

### 7. Description d'un mode de réalisation particulier de l'invention

Le principe général de l'invention repose sur le stockage d'informations relatives à des contenus audiovisuels ou de type Web, accessoires d'un contenu audiovisuel principal, lesdits contenus audiovisuels accessoires ayant été consultés par l'utilisateur depuis un deuxième équipement terminal pendant la restitution du contenu audiovisuel principal sur un premier équipement terminal. Les informations stockées comprennent en particulier une association entre le contenu supplémentaire et le contenu principal. L'invention repose aussi sur l'affichage d'une représentation d'un parcours de consultation de l'utilisateur en lien avec le contenu principal, pendant une période temporelle prédéterminée. Cet affichage peut être commandé sur l'écran du deuxième équipement terminal, sur celui du premier équipement terminal ou encore sur l'écran d'un autre équipement terminal auquel le deuxième équipement terminal est connecté par l'intermédiaire d'un réseau de télécommunications local ou étendu.
Une telle représentation comprend des zones d'intérêt sélectionnables, représentatives des contenus audiovisuels accessoires consultés et reliées à une étiquette du contenu principal. Sur sélection d'une zone d'intérêt, l'utilisateur accède aux contenus audiovisuels qu'il a déjà consultés pendant la restitution de ce contenu principal.

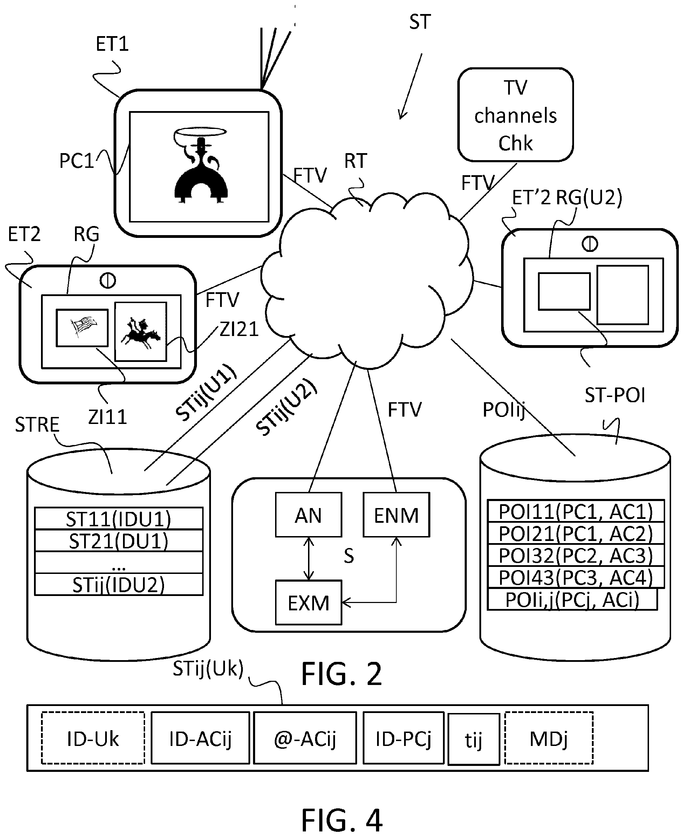

En relation avec la Fig. **2**, on considère un exemple de système ST de traitement de contenus supplémentaires selon l'invention. Un tel système comprend un premier équipement terminal ET1 sur lequel un utilisateur U1 regarde un programme TV diffusé par une chaîne de télévision CHk, avec k entier, d'un bouquet de chaînes TV. Dans la suite, on désignera ce programme par le terme contenu principal PCj avec j entier. L'utilisateur U1 dispose aussi d'un deuxième équipement terminal ET2, par exemple une tablette, sur laquelle il a activé une application logicielle connectée à un serveur distant S, qui lui envoie des contenus supplémentaires ACij, avec i entier, en lien avec le contenu principal PCj. De façon connue, le serveur S reçoit lui aussi les programmes TV diffusés par la chaîne de TV, leur associe des contenus supplémentaires pertinents que l'application logicielle propose ensuite à l'utilisateur du second équipement terminal par l'intermédiaire d'une interface comprenant des zones d'intérêt telles que des vignettes sélectionnables ZI11 et ZI21. Il s'agit par exemple de contenus web, que l'application charge, lorsqu'elle a détecté la sélection d'une zone d'intérêt par l'utilisateur U1. Plus généralement, il peut s'agit de tout type de contenu audiovisuel, comprenant une ou plusieurs images, vidéos, textes, liens vers d'autres contenus etc.

Selon un premier aspect, le serveur distant S obtient au moins un instant courant de diffusion du contenu principal par la chaîne de télévision CHk. En d'autres termes, il connait l'avancement de la diffusion en cours. Par ailleurs, il a préalablement associé des contenus supplémentaires à des instants prédéterminés de diffusion dudit contenu principal. Il a stocké ces informations en mémoire et il déclenche leur retransmission au second équipement terminal aux instants prédéterminés de la diffusion du contenu principal.

Selon un deuxième aspect, illustré par la Fig. **2**, le serveur reçoit le contenu principal diffusé PCj en même temps que l'utilisateur U1. Le serveur S comprend un module d'analyse AN du contenu principal apte à analyser le flux audiovisuel du contenu principal PCj et à en extraire des métadonnées MDj en temps réel. Par exemple, le module d'analyse extrait des métadonnées MDj des sous-titres du contenu principal PCj.

On entend ici par métadonnée toute information de description d'un contenu audiovisuel.

Avantageusement, le serveur S comprend en outre un module d'extraction EXM d'entités nommées, apte à extraire des unités textuelles particulières, appelées entités nommées NE de flux textuels, notamment des sous-titres d'un contenu audiovisuel analysé par le module d'analyse. Ces entités nommées (et leurs attributs) constituent des métadonnées pertinentes de type :
- Nom de personne ;
- Nom de lieu ;
- Nom d'organisation ;
- Nom de concept, etc.

De façon avantageuse, le module d'extraction EXM s'appuie sur des outils d'analyse sémantiques permettant l'identification d'entités nommées au sein d'un texte.

Par exemple, le module d'extraction requête le module d'analyse en mode http POST afin de récupérer les sous-titres à analyser au format XML (pour « Extensible Markup Language », en anglais). Il stocke ensuite les entités nommées NE extraites et les associe au programme TV PCi. Le programme TV PCi est identifié à l'aide d'un identifiant unique, indépendant de la chaîne TV, par exemple de type locationID.

Le serveur S comprend aussi un module ENM d'enrichissement de métadonnées apte à produire des contenus supplémentaires associés à ces métadonnées. D'une part, il obtient les métadonnées extraites par le module d'extraction EXM. Pour ce faire, il peut par exemple requêter régulièrement le module d'extraction EXM. Dans ce cas, la requête est par exemple émise en mode http POST et la réponse est reçue au format XML. D'autre part, il recherche dans des sources de données DS, par exemple de type Web des contenus supplémentaires à associées aux métadonnées extraites. Dans ce cas, il interroge les API des différentes sources de données dont il dispose pour récupérer les informations de description du contenu supplémentaire ACij qu'il souhaite associer à la métadonnée MDj extraite du contenu principal PCj.

A titre d'exemple, on considère que le contenu principal PCj diffusé est le film « Minority Report » dans lequel joue l'acteur Tom Cruise. Tom Cruise fait partie des entités nommées extraites par le module d'extraction EXM. Le module d'enrichissement ENM du serveur S est apte à associer à l'entité nommée « Tom Cruise » plusieurs contenus supplémentaires parmi lesquels on cite :
- L'article Wikipédia de Tom Cruise ;
- Des photos extraites du site web officiel de Tom Cruise ;
- Des vidéo DailyMotion de Tom Cruise ;
- Des éléments d'actualité type article ou dépêche évoquant Tom Cruise ;
- Des films dans lesquels Tome Cruise a joués, etc.

Toutes ces associations sont stockées dans une mémoire ST-POI, par exemple organisée comme une base de données, qui peut être intégrée au serveur S ou bien indépendante, sous la forme d'enregistrements ou point d'intérêts POlij comprenant au moins:
- Un identifiant locationldj du contenu principal PCj ;
- Une métadonnée MDj associée, par exemple une entité nommée ENj ;
- Un identifiant d'au moins un contenu supplémentaire ACij associé, un point d'intérêt POlij pouvant regrouper plusieurs contenus supplémentaires associés à un même contenu principal PCj et à une même métadonnée MDj ;
- Une adresse du contenu supplémentaire ACij.

Un tel enregistrement peut aussi comprendre un instant de référence tij. Par exemple, cet instant correspond à l'instant prédéterminé de diffusion du contenu principal. Il peut aussi correspondre à l'occurrence de la métadonnée MDj dans le contenu principal PCj.

Les enregistrements stockés POlij sont obtenus par le deuxième équipement terminal ET de l'utilisateur Uk. Par exemple, ils lui sont envoyés par le serveur S. Un tel envoi peut se faire, par exemple, par l'intermédiaire d'un système standard et ouvert de messagerie instantanée de type Jabber (marque déposée), qui est basé sur le protocole XML XMPP (« Extensible Messaging and Presence Protocol », en anglais). Dans ce cas, le serveur S qui héberge le module d'enrichissement ENM est un serveur de type Jabber et les équipements terminaux des clients Jabber. De façon connue, un client Jabber initialise l'ouverture d'une socket TCP/IP par l'intermédiaire de laquelle il échange des notifications avec le serveur S.

Dans cet exemple, on a considéré, par simplicité, que l'ensemble des traitements appliqués aux flux audiovisuels correspondant aux contenus principaux diffusés étaient mis en oeuvre au sein d'un unique équipement serveur du réseau de télécommunications. On notera que l'invention ne se limite pas à ce cas particulier, les modules d'analyse, d'extraction d'entités nommées et d'enrichissement des entités nommées pouvant, de façon alternative, être hébergés par des équipements distincts, mais connectés entre eux par le réseau de télécommunications RT.

Les contenus supplémentaires associés aux enregistrements POlij reçus par le deuxième équipement terminal de l'utilisateur U1 sont mis à disposition de l'utilisateur sous la forme de zones d'intérêt sélectionnables d'une interface graphique, affichée sur un écran d'un équipement terminal de l'utilisateur, connecté au second équipement terminal.

Par exemple, la mise à disposition peut être déclenchée à l'instant de référence tij associé à l'enregistrement POlij reçu. Lorsque l'utilisateur U1 sélectionne une de ces zones d'intérêt ZIij, le contenu supplémentaire ACij correspondant est consulté, ce qui a pour conséquence la commande de stockage local ou distant d'un enregistrement STij comprenant des informations de description et d'accès à ce contenu supplémentaire consulté. Le stockage local se fait dans une mémoire STRI non représentée. Le stockage distant se fait dans une mémoire STRE représentée sur la Fig. **2****.**

Dans le cas d'un stockage distant, l'enregistrement STij comprend un champ supplémentaire ID-U1 d'identification de l'utilisateur U1.

Si le contenu supplémentaire considéré est associé à une métadonnée particulière MDj, comme précédemment décrit, elle fait partie de l'enregistrement. Un exemple de format de cet enregistrement sera décrit plus en détails en relation avec la Fig. **4****.**

Selon l'invention, l'utilisateur U1 a ensuite la possibilité de choisir une période temporelle TP, par exemple une soirée, une semaine ou un mois et d'accéder à une représentation de son parcours audiovisuel pendant cette période.

Selon l'invention, le second équipement terminal ET2 commande la construction d'une représentation graphique des contenus supplémentaires ACij que l'utilisateur U1 a consultés en lien avec le ou les programmes TV diffusés PCj pendant la période de temps considérée. Cette commande peut être exécutée localement par le second équipement terminal ET2 ou bien par un serveur distant.

Le second équipement terminal ET2 commande ensuite l'affichage de cette représentation graphique RG sur son propre écran, sur l'écran du premier équipement terminal, par exemple une télévision ou encore sur un autre équipement terminal auquel il a accès, par exemple sélectionné par l'utilisateur U1.

Sur cette représentation RG, les contenus supplémentaires ACij consultés sont matérialisés par des zones d'intérêt, par exemple des vignettes ZIij sélectionnables, dont la sélection entraîne un nouvel accès au contenu supplémentaire ACij associé.

L'utilisateur a donc la possibilité de sélectionner un contenu supplémentaire ACij et de le consulter de nouveau. Il réalise cette sélection depuis son second équipement terminal lorsque l'affichage est local ou bien lorsque l'affichage est distant, en utilisant ce second équipement terminal comme une télécommande d'un autre équipement terminal sur lequel la représentation est affichée.

Selon l'invention, le second équipement terminal peut aussi commander le stockage local ou distant de cette représentation graphique.

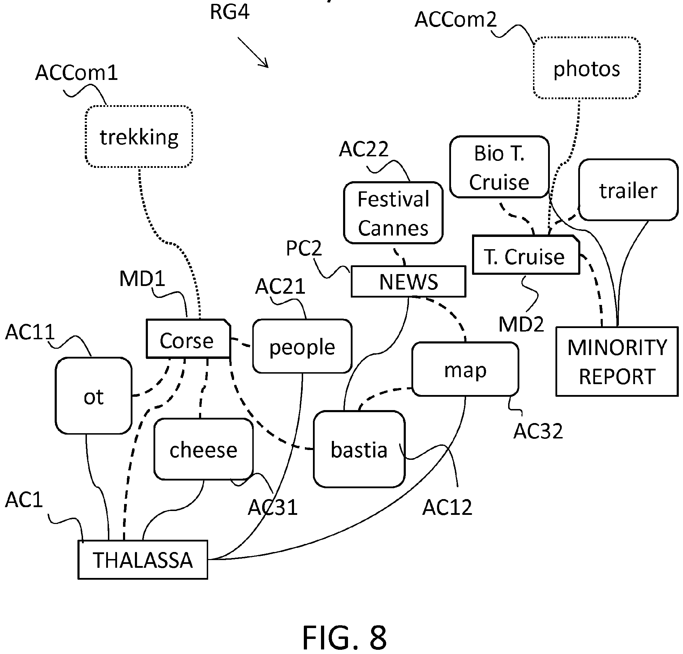

Sur la Fig. **2**, on a représenté le deuxième équipement terminal ET'2 d'un utilisateur U2. Cet équipement terminal met lui aussi en oeuvre le procédé de traitement selon l'invention. Dans cet exemple, les enregistrements STij(ID-U2) de l'utilisateur U2 sont stockés dans la mémoire externe STRE. Le fait de stocker les enregistrements de plusieurs utilisateurs dans une même mémoire externe permet d'exploiter ces enregistrements dans une même interface graphique. Un exemple de cas d'usage des enregistrements issus des consultations de plusieurs utilisateurs sera présenté en relation avec la Fig. **8**.

En relation avec la Fig. **3**, on présente maintenant un exemple de mise en oeuvre du procédé de traitement d'au moins un contenu supplémentaire selon un mode de réalisation de l'invention. Ce procédé est exécuté par le deuxième équipement terminal ET2 de l'utilisateur.

Au cours d'une première étape T1, le second équipement terminal met à disposition de l'utilisateur Uk des contenus supplémentaires ACij qu'il reçoit du serveur S pendant la restitution du contenu principal PCj sur le premier équipement terminal ET1. Avantageusement, il reçoit des informations de description et d'accès aux contenus supplémentaires AC1j, AC2j associés au contenu principal PCj, par exemple sous la forme d'enregistrements POlij.

Par exemple, l'équipement terminal ET2 utilise les informations reçues pour construire et afficher une représentation graphique comprenant des zones d'intérêt sélectionnables associées respectivement aux contenus supplémentaires ACij.

Suite à la sélection par l'utilisateur d'une zone d'intérêt Zij, avec i entier, une étape T2 de consultation du contenu supplémentaire correspondant est mise en oeuvre. Avantageusement, cette étape comprend l'accès au contenu supplémentaire ACi et la restitution de ce contenu sur l'écran du second équipement terminal, à côté ou à la place de la représentation précédente.

Suite à la consultation par l'utilisateur du contenu supplémentaire sélectionné, une étape T3 de commande de stockage d'un enregistrement STij relatif à cette consultation par l'utilisateur Uk est mise en oeuvre.

Un exemple d'un tel enregistrement est décrit en relation avec la Fig. **4**. Il comprend au moins :
- un identifiant ID-ACij du contenu supplémentaire ACij consulté ;
   une adresse @-ACij permettant d'accéder à ce contenu. Il s'agit par exemple d'une URL ou d'une URI, par exemple http://programme-tv.orange.fr/actualite-tv/quiz/;
- un identifiant du contenu principal PCj auquel le contenu supplémentaire ACij consulté est associé ; et
- un instant tij de référence.

Le stockage de l'enregistrement STij qui vient d'être décrit peut être effectué localement, dans une base de données d'une mémoire interne au second équipement terminal ou bien à distance dans un serveur du réseau de télécommunications.

Selon un aspect de l'invention, lorsque la mise à disposition d'un contenu supplémentaire ACij est déclenchée par l'occurrence d'une métadonnée MDj au cours de la diffusion du contenu principal PCj, l'enregistrement STij comprend en outre la métadonnée déclencheuse MDj.

Par souci de simplicité, on n'a représenté qu'une seule métadonnée MDj déclencheuse. Néanmoins, on pourrait très bien envisager de déclencher la mise à disposition d'un contenu supplémentaire sur détection des occurrences consécutives de plusieurs métadonnées d'un même groupe de métadonnées dans un intervalle de temps prédéterminé.

Selon un autre aspect de l'invention, l'enregistrement STij comprend en outre un identifiant ID-Uk de l'utilisateur Uk. Ce champ supplémentaire permet de distinguer les enregistrements d'utilisateurs différents. L'identifiant de l'utilisateur Uk peut aussi bien être un identifiant dédié au service qu'un identifiant de cet utilisateur dans un réseau social ou encore un numéro de téléphone de cet utilisateur. Un exemple d'application sera présenté en relation avec la Fig. **8**.

Au cours d'une étape T4, le second équipement terminal ET2 commande la construction et l'affichage d'une représentation graphique d'un parcours de consultation des contenus supplémentaires stockés pour l'utilisateur pendant la période temporelle TP prédéterminée.

De façon avantageuse, la période temporelle prédéterminée est choisie au préalable par l'utilisateur. Il peut s'agir de la plus récente période écoulée, par rapport à la date courante, comme par exemple la dernière soirée ou encore une période particulière dont la date est sélectionnée par l'utilisateur. L'étape T4 peut avantageusement être déclenchée partir du moment où la période temporelle prédéterminée est écoulée, soit automatiquement, soit sur requête de l'utilisateur.

Les enregistrements obtenus sont exploités au cours d'une étape T5 pour construire une interface comprenant une représentation graphique RG d'un parcours de consultation de contenus supplémentaires de l'utilisateur sur son deuxième équipement terminal. Son affichage est commandé au cours d'une étape T6.

A partir de cette représentation, l'utilisateur peut sélectionner une zone d'intérêt et consulter de nouveau le ou les contenus supplémentaires associés.

On comprend que le stockage des enregistrements et/ou la construction de l'interface et/ou son affichage peuvent être exécutés par un autre équipement que l'équipement terminal qui met en oeuvre le procédé de traitement selon l'invention. Il s'agit par exemple du serveur distant S qui, sur commande du deuxième équipement terminal ET2, stocke les enregistrements dans la mémoire externe STRE et construit l'interface comprenant la représentation graphique correspondant au parcours de consultation de l'utilisateur pendant la période temporelle TP. L'affichage peut ensuite avoir lieu sur l'écran du deuxième équipement terminal ET2 ou sur un autre équipement terminal , pourvu qu'il soit connecté au terminal ET2 et au serveur S.

En relation avec la Fig. **4**, on présente maintenant un exemple de structure d'un enregistrement STij d'informations de description d'un contenu supplémentaire ACij consulté en lien avec un contenu principal PCj.

Un tel enregistrement comprend au moins les champs suivants :
- ID-ACij, un identifiant du contenu supplémentaire ACij consulté par l'utilisateur pendant la diffusion du contenu principal PCj ;
- @-ACij, une adresse de type URI ou URL permettant d'accéder au contenu supplémentaire ACij ;
- ID-PCj, un identifiant du contenu principal PCj ; et
- tij, un instant de référence .

Avantageusement, l'enregistrement STij comprend en outre :
- MDij, une métadonnée déclencheuse de la mise à disposition du contenu supplémentaires ACij pendant la diffusion du contenu principal PCj. Bien qu'une seule métadonnée soit représentée, on notera que l'enregistrement STij pourrait aussi inclure plusieurs métadonnées MDijm, avec m entier supérieur ou égal à 2, lorsque la mise à disposition du contenu supplémentaire ACij est déclenchée par l'occurrence de plusieurs métadonnées; et
- ID-Uk, un identifiant de l'utilisateur Uk. Cet identifiant est particulièrement utile en cas de stockage distant de l'enregistrement STij, car il permet de distinguer les enregistrements de l'utilisateur Uk de ceux d'autres utilisateurs. Tout type d'identifiant peut être utilisé, comme par exemple un numéro de téléphone, un identifiant client attribué par le fournisseur de service ou encore un identifiant de réseau social.

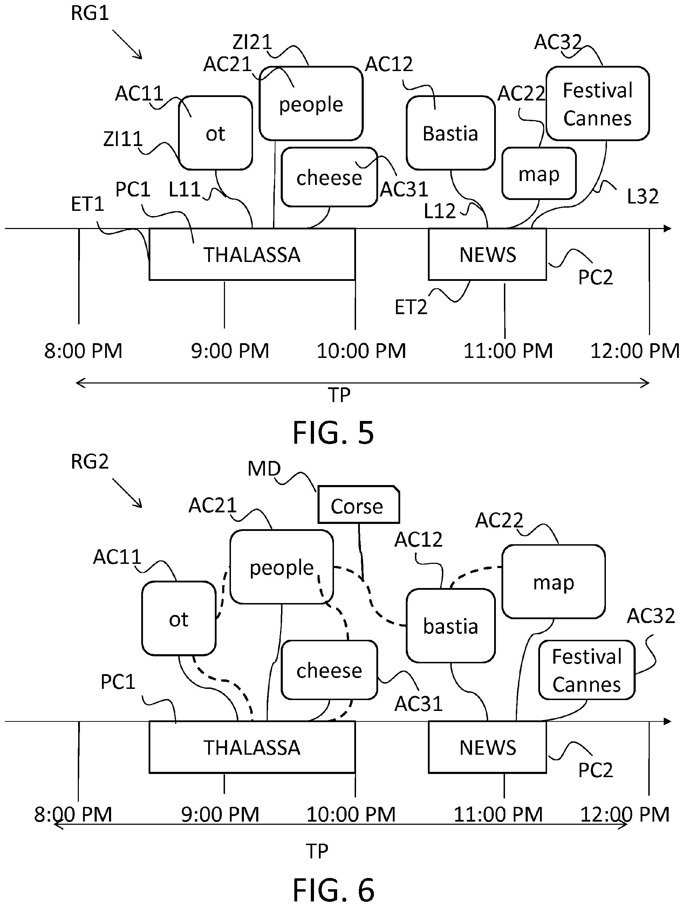

En relation avec la Fig. **5**, on présente maintenant un exemple d'une telle interface selon un premier mode de réalisation de l'invention. La représentation RG1 comprend des zones d'intérêt, par exemple des vignettes Zij correspondant aux contenus supplémentaires ACij consultés au cours de la période temporelle TP considérée. Ces vignettes sont reliées, par exemple au moyen de lignes courbes Lij, à une étiquette ETj représentative du contenu principal PCj auxquelles elles sont associées. Ainsi, en suivant du regard les fils qui partent de cette étiquette, l'utilisateur peut-il retrouver les contenus supplémentaires qu'il a consultés en lien avec ce contenu principal.

Selon l'invention, l'utilisateur a la possibilité d'interagir avec l'interface RG1, notamment de sélectionner une des vignettes Zij, par exemple en cliquant ou en passant son doigt dessus dans le cas où l'équipement terminal utilisé pour la consultation serait équipé d'une dalle tactile. Sur détection d'une telle sélection par l'équipement terminal, une étape de consultation du contenu supplémentaire ACij correspondant à la vignette Zij sélectionnée est mise en oeuvre. Cette étape comprend le fait d'accéder à une copie de ce contenu et utilise l'adresse @-ACij stockée dans l'enregistrement STij.

Dans cet exemple, la période temporelle TP considérée est une soirée, au cours de laquelle l'utilisateur a regardé le programme télévisé PC1 Thalassa. Ce programme présente généralement une suite de reportages sur le thème de la mer. Un des reportages diffusés portait sur la côte Corse. Pendant la diffusion de ce programme, l'utilisateur a consulté trois contenus supplémentaires sur sa tablette ET2 :
- le site web de l'office du tourisme de Corse (ot) AC11 ;
- une actualité sur des personnalités corses (people) AC21 ; et
- une recette de cuisine à base de fromage corse (cheese) AC31.
Sur l'interface RG1, les vignettes correspondant à ces trois contenus supplémentaires consultés sont reliées à l'aide de lignes courbes Lij à l'étiquette Thalassa représentative du contenu principal PC1.

Bien sûr, le lien entre les trois contenus supplémentaires et le contenu principal pourrait être matérialisé différemment. Par exemple, on pourrait envisager que lorsque l'utilisateur passe son doigt sur l'étiquette du contenu principal, les vignettes des contenus supplémentaires associés changent d'apparence, par exemple de couleur ou bien apparaissent en surbrillance. Dans le cadre de l'invention, tout moyen visuel, sonore ou encore vibro-tactile permettant de matérialiser le lien sémantique qui existe entre les contenus supplémentaires consultés et le contenu principal auquel ils sont associés, peut être utilisé.

Plus tard au cours de cette même soirée, l'utilisateur a regardé le journal télévisé NEWS PC2. En même temps, il a consulté les contenus supplémentaires suivants sur sa tablette :
- une page d'actualité sur la ville de Bastia ;
- une carte géographique de Corse ;
- une page d'actualité sur le festival de Cannes.
Les liens entre contenus supplémentaires et contenu principal PC2 sont mis en exergue de façon analogue à ce qui vient d'être décrit.

Dans cet exemple, une représentation chronologique a été privilégiée, ce qui est bien adapté à l'échelle temporelle d'une soirée. L'utilisateur peut ainsi s'appuyer sur des repères chronologiques pour retrouver les informations qui l'intéressent. Il lui suffit de partir de l'étiquette d'un contenu principal placé sur l'axe temporel et de suivre une sorte de fil d'Ariane pour être guidé vers les contenus supplémentaires qu'il a consultés en lien avec chaque contenu principal.

En relation avec la Fig. **6**, on présente maintenant un exemple de représentation graphique RG2 selon un deuxième mode de réalisation de l'invention.

Dans cet exemple, on considère qu'un contenu supplémentaire ACij est associé à une métadonnée déclencheuse MDj qui a été stockée en mémoire dans l'enregistrement STij correspondant.

L'interface RG2 comprend une étiquette représentative de la métadonnée associée à un contenu supplémentaire et la vignette du contenu supplémentaire est reliée à cette étiquette.

A titre d'exemple, la métadonnée déclencheuse des contenus supplémentaires AC11, AC21 et AC31 est la Corse et les vignettes ZI11, ZI21, ZI31 sont non seulement reliées par une ligne courbe pointillée à l'étiquette « Corse ». En représentant explicitement le lien sémantique qui relie les contenus supplémentaires à leur métadonnée déclencheuse, l'interface RG2 et facilite le travail de mémoire de l'utilisateur et l'assiste encore davantage dans sa recherche.

En outre, les vignettes ZI11, ZI21, ZI31 sont reliées entre elles par des lignes courbes pointillées, afin de mettre davantage en exergue leur lien sémantique.

De plus, si on considère le deuxième contenu principal NEWS PC2 regardé par l'utilisateur, on constate que deux des contenus supplémentaires AC12, AC22 qu'il a consultés sont associés eux aussi à la métadonnée « Corse ». Leurs vignettes ZI12, ZI22 sont donc elles aussi rattachées à l'étiquette « Corse » et reliées aux vignettes ZI11, ZI21, V33 des contenus supplémentaires associées au premier contenu principal.

Ce type de représentation met donc en évidence les liens sémantiques qui existent entre les contenus supplémentaires consultés.

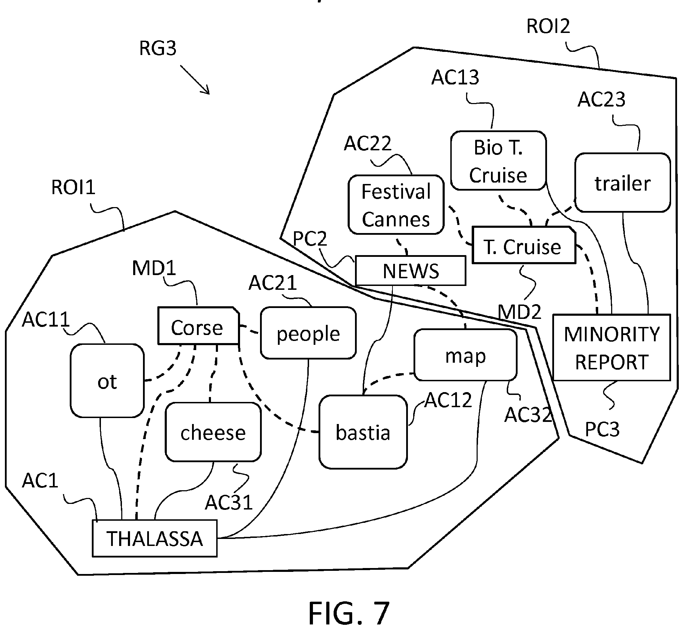

En relation avec la Fig. **7**, on présente maintenant un exemple d'interface graphique RG3 selon un troisième mode de réalisation de l'invention. Dans cet exemple, on considère que l'utilisateur a regardé un troisième programme TV après les deux programmes PC1 et PC2 précédemment présentés. Il s'agit du film « Minority Report » avec Tom Cruise, qui constitue la troisième partie de sa soirée TV. Pendant la diffusion de ce film, il a consulté les contenus supplémentaires suivants :
- une biographie Wikipedia de Tom Cruise AC13 ;
- la bande d'annonce du dernier film à l'affiche avec Tom Cruise AC23 ;

Ces deux contenus supplémentaires sont associés au contenu principal PC3 « Minority Report » et partagent la métadonnée « Tom Cruise ».

On notera que le contenu supplémentaire CS31 « Festival de Cannes » associé au contenu principal NEWS CP2 est lié lui aussi à la métadonnée Tom Cruise.

Dans ce troisième exemple d'interface, l'axe temporel a été abandonné au profit d'une représentation par région d'intérêt ROI (pour « Region of Interest », en anglais). Une région d'intérêt est associée à une métadonnée particulière et regroupe les zones d'intérêt des contenus supplémentaires associés à cette ou ces métadonnées.

A partir de la soirée TV qu'on vient de décrire, on obtient deux régions d'intérêt, une région d'intérêt ROI1 centrée sur la métadonnée « Corse » et regroupant géographiquement des contenus supplémentaires associés à la fois au premier et au deuxième contenus principaux et une région d'intérêt « Tom Cruise » regroupant des contenus supplémentaires.

Une telle représentation par région donne la priorité au lien sémantique. Il présente beaucoup d'intérêt lorsque le parcours de consultation est dense, soit parce que l'utilisateur a consulté un nombre conséquent de contenus supplémentaires, soit parce que la période temporelle considérée est longue. En effet, dans ces cas-là, une présentation temporelle devient rapidement fastidieuse, alors qu'un regroupement géographique par thèmes est beaucoup plus structuré et facilite l'accès à l'information.

En relation avec la Fig. **7**, on présente maintenant un exemple d'interface graphique RG4 selon un quatrième mode de réalisation de l'invention. Dans cet exemple, on reprend la consultation précédente. Toutefois, on considère en outre que la représentation RG4 est construite non seulement à partir d'enregistrements de l'utilisateur Uk et à partir d'enregistrements d'autres utilisateurs pour enrichir le parcours de consultation de l'utilisateur Uk.

Il en résulte que la représentation graphique RG4 du parcours de consultation de l'utilisateur Uk comprend non seulement des zones d'intérêt correspondant aux contenus supplémentaires consultés par l'utilisateur Uk, mais aussi des contenus supplémentaires consultés par d'autres utilisateurs.

Par exemple, on considère les contenus supplémentaires en lien avec la métadonnée MD1 « Corse ». L'utilisateur Uk a consulté des contenus supplémentaires AC11, AC21 et AC12 et AC32. Toutefois, la représentation graphique RG4 affiche en outre le contenu supplémentaire ACCom1 consulté par un ou plusieurs autres utilisateurs de la communauté. On notera que dans ce cas, le contenu supplémentaire ACCOM1 n'a pas forcément été consulté pendant la diffusion du même contenu principal « THALASSA » PC1, le lien considéré ici entre le contenu supplémentaire ACCom1 et le contenu principal PC1 étant la métadonnée « Corse ». On peut envisager qu'il a été consulté à l'occasion de la diffusion d'un autre reportage sur la Corse, mais qu'il est lui aussi associé à la métadonnée « Corse ».

De la même manière, le contenu supplémentaire ACCOM2 est lié à la métadonnée « T. Cruise », mais est associé à un autre contenu principal que celui consulté par l'utilisateur Uk.

Ainsi, avec l'invention, l'utilisateur Uk a la possibilité d'enrichir son parcours de consultation et de découvrir d'autres contenus supplémentaires en lien avec un thème ou un programme TV qui l'intéresse.

Un premier cas d'usage est la recommandation de contenus supplémentaires par la chaîne TV. En effet, ce mode de réalisation permet à la chaîne TV de pousser vers l'utilisateur d'autres contenus supplémentaires qu'il a identifiés comme susceptibles d'intéresser cet utilisateur.

Un deuxième cas d'usage est le partage de consultations entre membres d'une même communauté. Avec l'invention, l'utilisateur peut faire partager ses consultations de contenus supplémentaires à ses amis dans un réseau social.

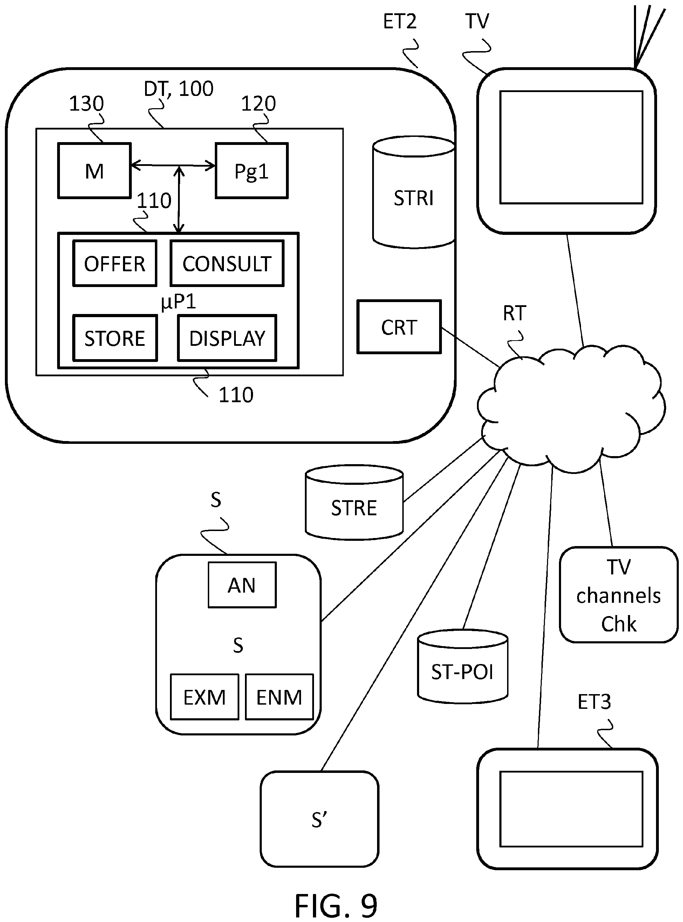

Le procédé de traitement d'au moins un contenu supplémentaire qui vient d'être décrit est destiné à être mis en oeuvre dans un dispositif de traitement selon l'invention, dont un exemple de structure simplifiée va maintenant être présenté en relation avec la Fig. **9**.

Dans cet exemple un tel dispositif DT 100 est intégré dans un équipement terminal ET2.

Par exemple, le dispositif 100 comprend une unité de traitement 110, équipée d'un processeur P1, et pilotée par un programme d'ordinateur Pg₁ 120, stocké dans une mémoire 130 et mettant en oeuvre le procédé de traitement selon l'invention.

A l'initialisation, les instructions de code du programme d'ordinateur Pg₁ 120 sont par exemple chargées dans une mémoire RAM avant d'être exécutées par le processeur de l'unité de traitement 110. Le processeur de l'unité de traitement 110 met en oeuvre les étapes du procédé de traitement décrit précédemment, selon les instructions du programme d'ordinateur 120. Selon l'invention, le dispositif 100 comprend au moins une unité OFFER de mise à disposition d'au moins un contenu supplémentaire associé à un contenu principal en cours de restitution sur un premier équipement terminal ET1 de l'utilisateur, une unité CONSULT de consultation d'un contenu supplémentaire apte à être mise en oeuvre sur détection d'une sélection par l'utilisateur, une unité STORE de commande de stockage d'un enregistrement comprenant au moins un identifiant du contenu supplémentaire, une adresse du contenu supplémentaire, un instant de consultation et un identifiant du contenu principal associé, une unité BUILD de commande de construction d'une représentation comprenant des zones d'intérêt sélectionnables, représentatives des contenus supplémentaires associés aux enregistrements obtenus, une zone d'intérêt étant étiquetée avec une information représentative du contenu principal auquel elle est associée, une unité DISP de commande d"affichage de cette représentation. Ces commandes de construction et d'affichage peuvent être exécutées localement par le second équipement terminal ou à distance par un serveur du réseau ou un autre équipement terminal ET3, connecté au deuxième équipement terminal ET2 par un réseau de télécommunications. Avantageusement, le dispositif DT est adapté pour permettre à l'utilisateur de consulter de nouveau le contenu supplémentaire associé à une zone d'intérêt sur détection d'une sélection de la zone d'intérêt par l'utilisateur.

De façon avantageuse, l'unité STORE est apte à commander un enregistrement STij local ou distant des informations associées à un contenu supplémentaire consulté par l'utilisateur. Avantageusement, l'enregistrement comprend en outre un champ d'identification de l'utilisateur Uk. Ce champ est particulièrement utile lorsque les enregistrements de différents utilisateurs sont stockés dans la même unité de stockage.

L'enregistrement peut aussi comprendre une ou plusieurs métadonnées associées au déclenchement de la mise à disposition du contenu supplémentaire. Dans ce cas, l'unité DISP est apte à afficher une représentation graphique comprenant l'étiquetage d'une zone d'intérêt avec une information représentative de la métadonnée à laquelle son contenu supplémentaire est associé.

De façon avantageuse, l'unité BUILD peut comprendre une unité GET adaptée à obtenir les enregistrements STij de l'utilisateur Uk lorsqu'ils ont été stockés à distance et lorsque la construction de l'interface est mise en oeuvre localement.
Ces unités sont pilotées par le processeur P1 de l'unité de traitement 110.

Le dispositif 100 de traitement est donc agencé pour coopérer avec l'équipement terminal ET2 et, en particulier les modules suivants de cet équipement:
- un module de connexion CRT au réseau de télécommunications RT par exemple par des moyens de communication radio courte portée de type Wifi ou des moyens de communication filaires de type éthernet;
- un module de stockage STRI interne des enregistrements STij relatifs aux contenus supplémentaires consultés par l'utilisateur.

Il est en outre agencé pour coopérer avec les entités distantes suivantes:
- le module ST-POI de stockage des enregistrements de contenus supplémentaires POI ;
- le module externe STRE de stockage des enregistrements de contenus supplémentaires STij consultés par son ou ses utilisateurs ;
- un serveur S' adapté pour exécuter les commandes de construction et d'affichage émises par le dispositif de traitement 100 selon l'invention.

## Revendications

1. Procédé de traitement d'au moins un contenu supplémentaire associé à un contenu multimédia principal en cours de restitution sur un écran d'un premier équipement terminal, ledit procédé comprenant une étape de mise à disposition de l'utilisateur dudit au moins contenu supplémentaire sous la forme d'une interface graphique comprenant une zone d'intérêt sélectionnable, affichée sur un écran d'un deuxième équipement terminal pendant la restitution du contenu principal et, sur sélection par l'utilisateur de la zone d'intérêt représentative dudit contenu supplémentaire, une étape de consultation dudit contenu supplémentaire sur l'écran du deuxième équipement terminal, ledit procédé étant **caractérisé en ce qu'**il comprend en outre les étapes suivantes :
- commande de stockage d'un enregistrement relatif à la consultation dudit contenu supplémentaire, ledit enregistrement comprenant au moins un identifiant du contenu supplémentaire, une adresse dudit contenu supplémentaire, un identifiant du contenu principal associé, un parcours de consultation et et un instant de référence ;
- commande d'affichage d'une représentation du parcours de consultation de l'utilisateur pendant une période temporelle prédéterminée, ladite représentation comprenant des zones d'intérêt sélectionnables, représentatives des contenus supplémentaires associés aux enregistrements stockés comprenant un instant de référence inclus dans la période temporelle prédéterminée, une zone d'intérêt étant étiquetée avec une information représentative du contenu principal auquel elle est associée,
dans lequel le stockage de l'enregistrement relatif à la consultation du contenu supplémentaire et le parcours de consultation sont relatifs à un historique de consultations pendant la période temporelle prédéterminée.

2. Procédé de traitement d'au moins un contenu supplémentaire selon la revendication **1**, **caractérisé en ce que** les zones d'intérêt de contenus supplémentaires étiquetées avec une information représentative d'un même contenu principal sont regroupées dans une même région d'intérêt de ladite représentation.

3. Procédé de traitement d'au moins un contenu supplémentaire selon l'une des revendications **1 ou 2**, **caractérisé en ce que** les zones d'intérêt de contenus supplémentaires consultés sont disposées le long d'un axe temporel représentatif de la période temporelle prédéterminée, selon un ordre fonction de l'instant de référence associé audit contenu supplémentaire.

4. Procédé de traitement d'au moins un contenu supplémentaire selon l'une des revendication **1 à 3**, selon lequel un contenu supplémentaire est associé à une métadonnée et selon lequel la mise à disposition du contenu supplémentaire sur le deuxième équipement terminal est déclenchée suite à la détection d'une occurrence de ladite métadonnée au cours de la restitution du contenu principal sur le premier équipement terminal, ledit procédé étant **caractérisé en ce que** l'enregistrement stocké comprend en outre ladite métadonnée et **en ce que** l'étape d'affichage comprend en outre l'étiquetage d'une zones d'intérêt avec une information représentative de la métadonnée à laquelle elle est associée.

5. Procédé de traitement d'au moins un contenu supplémentaire selon l'une des revendications précédentes, **caractérisé en ce que** l'instant de référence appartient à un groupe comprenant au moins :
- un instant de début du contenu principal ;
- Un instant de fin du contenu principal ;
- Un instant de mise à disposition du contenu supplémentaire ;
- un instant de consultation du contenu supplémentaire.

6. Procédé de traitement d'un contenu supplémentaire selon les revendications **4** et **5**, **caractérisé en ce que** le groupe comprend en outre un instant d'occurrence de ladite au moins une métadonnée déclencheuse du contenu supplémentaire.

7. Procédé de traitement d'au moins un contenu supplémentaire selon la revendication **4**, **caractérisé en ce que**, ladite au moins une métadonnée appartenant à un groupe thématique comprenant une pluralité de métadonnées, l'étape de commande de stockage comprend le stockage d'un identifiant dudit groupe thématique dans l'enregistrement et l'étape d'affichage comprend l'étiquetage des zones d'intérêt associées à des métadonnées d'un même groupe thématique avec une information représentative de ce groupe et le regroupement des zones d'intérêt de contenus supplémentaires associés à un même thème dans une même région d'intérêt de la représentation.

8. Procédé de traitement d'au moins un contenu supplémentaire selon l'une des revendications précédentes, **caractérisé en ce que** l'enregistrement comprend en outre un identifiant de l'utilisateur.

9. Procédé de traitement d'au moins un contenu supplémentaire selon la revendication **8**, **caractérisé en ce qu'**il comprend une étape d'obtention d'enregistrements relatifs à la consultation par d'autres utilisateurs pendant la période temporelle prédéterminée d'autres contenus supplémentaires associés aux mêmes contenus principaux, dits contenus supplémentaires recommandés et **en ce que** l'étape d'affichage comprend l'insertion dans la représentation de zones d'intérêt correspondant auxdits contenus supplémentaires recommandés.

10. Procédé de traitement d'au moins un contenu supplémentaire selon la revendication 8, **caractérisé en ce que**, l'utilisateur appartenant à au moins une communauté d'utilisateurs d'un réseau social, les enregistrements relatifs à la consultation de contenus supplémentaires recommandés sont associés à des utilisateurs de ladite au moins une communauté.

11. Dispositif de traitement d'au moins un contenu supplémentaire associé à un contenu multimédia principal en cours de restitution sur un écran d'un premier équipement terminal, comprenant une unité de mise à disposition de l'utilisateur d'au moins contenu supplémentaire sous la forme d'une interface graphique comprenant une zone d'intérêt sélectionnable affichée sur un écran d'un deuxième équipement terminal pendant la restitution du contenu principal, ledit dispositif comprenant une unité de consultation d'un contenu supplémentaire mis à disposition sur l'écran du deuxième équipement terminal apte à être mis en oeuvre sur sélection par l'utilisateur de la zone d'intérêt représentative dudit contenu supplémentaire ;
ledit dispositif étant **caractérisé en ce qu'**il comprend en outre les unités suivantes :
- commande de stockage d'un enregistrement relatif à la consultation d'un contenu supplémentaire, ledit enregistrement comprenant au moins un identifiant du contenu supplémentaire, une adresse dudit contenu supplémentaire, un identifiant du contenu principal associé, un parcours audiovisuel de l'utilisateur et un instant de référence ;
- affichage d'une représentation du parcours audiovisuel de l'utilisateur pendant la période temporelle prédéterminée, ladite représentation comprenant des zones d'intérêt sélectionnables, représentatives des contenus supplémentaires associés aux enregistrements stockés comprenant un instant de référence inclus dans la période temporelle prédéterminée, une zone d'intérêt étant étiquetée avec une information représentative du contenu principal auquel elle est associée,
dans lequel les unités de stockage et d'affichage sont agencées pour la mise en oeuvre d'un procédé de traitement selon l'une quelconque des revendications 1 à 10.

12. Equipement terminal comprenant au moins un écran et un module de connexion à un réseau de télécommunication, **caractérisé en ce qu'**il comprend en outre un dispositif de traitement d'un contenu supplémentaire associé à un contenu multimédia principal en cours de restitution sur un écran d'un premier équipement terminal, selon la revendication **11**.

13. Programme d'ordinateur comprenant des instructions pour la mise en oeuvre du procédé de traitement selon l'une des revendications **1** à **10** lorsque ce programme est exécuté par un processeur.

## Patentansprüche

1. Verfahren zum Verarbeiten mindestens eines zusätzlichen Inhalts, der einem Hauptmultimediainhalt zugeordnet wird, der momentan auf einem Bildschirm eines ersten Endgeräts wiedergegeben wird, wobei das Verfahren einen Schritt des dem Nutzer Bereitstellens des mindestens einen zusätzlichen Inhalts in Form von einer grafischen Schnittstelle, die einen auswählbaren Interessenbereich aufweist, der auf einem Bildschirm eines zweiten Endgeräts während der Wiedergabe des Hauptinhalts angezeigt wird, und bei Auswahl durch den Nutzer des Interessenbereichs, der für den zusätzlichen Inhalt repräsentativ ist, einen Schritt des Konsultierens des zusätzlichen Inhalts auf dem Bildschirm des zweiten Endgeräts aufweist,
wobei das Verfahren **dadurch gekennzeichnet ist, dass** es ferner die folgenden Schritte aufweist:
- Befehlen des Speicherns einer Aufzeichnung in Bezug auf das Konsultieren des zusätzlichen Inhalts, wobei die Aufzeichnung mindestens eine Kennung des zusätzlichen Inhalts, eine Adresse des zusätzlichen Inhalts, eine Kennung des zugeordneten Hauptinhalts, einen Konsultationspfad und einen Referenzzeitpunkt aufweist;
- Befehlen des Anzeigens einer Darstellung des Konsultationspfades des Nutzers während einer vorbestimmten Zeitdauer, wobei die Darstellung auswählbare Interessenbereiche aufweist, die für die zusätzlichen Inhalte repräsentativ sind, die den gespeicherten Aufzeichnungen zugeordnet werden, die einen Referenzzeitpunkt aufweisen, der in der vorbestimmten Zeitdauer enthalten ist, wobei ein Interessenbereich mit einer Information gekennzeichnet wird, die für den Hauptinhalt repräsentativ ist, dem er zugeordnet wird,
wobei sich das Speichern der Aufzeichnung in Bezug auf das Konsultieren des zusätzlichen Inhalts und der Konsultationspfad auf eine Konsultationshistorie während der vorbestimmten Zeitdauer beziehen.

2. Verfahren zum Verarbeiten mindestens eines zusätzlichen Inhalts nach Anspruch 1, **dadurch gekennzeichnet, dass** die Interessenbereiche von zusätzlichen Inhalten, die mit einer Information gekennzeichnet werden, die für einen gleichen Hauptinhalt repräsentativ ist, in einem gleichen Interessengebiet der Darstellung zusammengefasst werden.

3. Verfahren zum Verarbeiten mindestens eines zusätzlichen Inhalts nach einem der Ansprüche 1 oder 2, **dadurch gekennzeichnet, dass** die Interessenbereiche von konsultierten zusätzlichen Inhalten entlang einer Zeitachse, die für die vorbestimmte Zeitdauer repräsentativ ist, in einer Reihenfolge, die von dem Referenzzeitpunkt abhängig ist, der dem zusätzlichen Inhalt zugeordnet wird, angeordnet werden.

4. Verfahren zum Verarbeiten mindestens eines zusätzlichen Inhalts nach einem der Ansprüche 1 bis 3, wobei ein zusätzlicher Inhalt einem Metadatum zugeordnet wird und wobei das Bereitstellen des zusätzlichen Inhalts auf dem zweiten Endgerät infolge des Erfassens eines Auftretens des Metadatums bei der Wiedergabe des Hauptinhalts auf dem ersten Endgerät ausgelöst wird, wobei das Verfahren **dadurch gekennzeichnet ist, dass** die gespeicherte Aufzeichnung ferner das Metadatum aufweist und dass der Schritt des Anzeigens ferner das Kennzeichnen von einem Interessenbereich mit einer Information aufweist, die für das Metadatum repräsentativ ist, dem sie zugeordnet wird.

5. Verfahren zum Verarbeiten mindestens eines zusätzlichen Inhalts nach einem der vorhergehenden Ansprüche, **dadurch gekennzeichnet, dass** der Referenzzeitpunkt zu einer Gruppe gehört, umfassend mindestens:
- einen Anfangszeitpunkt des Hauptinhalts,
- einen Endzeitpunkt des Hauptinhalts,
- einen Zeitpunkt des Bereitstellens des zusätzlichen Inhalts,
- einen Zeitpunkt des Konsultierens des zusätzlichen Inhalts.

6. Verfahren zum Verarbeiten eines zusätzlichen Inhalts nach einem der Ansprüche 4 und 5, **dadurch gekennzeichnet, dass** die Gruppe ferner einen Zeitpunkt des Auftretens des mindestens einen Metadatums aufweist, das den zusätzlichen Inhalt auslöst.

7. Verfahren zum Verarbeiten mindestens eines zusätzlichen Inhalts nach Anspruch 4, **dadurch gekennzeichnet, dass**, nachdem das mindestens eine Metadatum zu einer thematischen Gruppe gehört, die mehrere Metadaten aufweist, der Schritt des Befehlens des Speicherns das Speichern einer Kennung der thematischen Gruppe in der Aufzeichnung aufweist und der Schritt des Anzeigens das Kennzeichnen der Interessenbereiche, die Metadaten einer gleichen thematischen Gruppe zugeordnet werden, mit einer Information, die für diese Gruppe repräsentativ ist, und das Zusammenfassen der Interessenbereiche von zusätzlichen Inhalten aufweist, die einem gleichen Thema in einem gleichen Interessengebiet der Darstellung zugeordnet werden.

8. Verfahren zum Verarbeiten mindestens eines zusätzlichen Inhalts nach einem der vorhergehenden Ansprüche, **dadurch gekennzeichnet, dass** die Aufzeichnung ferner eine Kennung des Nutzers aufweist.

9. Verfahren zum Verarbeiten mindestens eines zusätzlichen Inhalts nach Anspruch 8, **dadurch gekennzeichnet, dass** es einen Schritt des Erhaltens von Aufzeichnungen in Bezug auf die Konsultation durch andere Nutzer während der vorbestimmten Zeitdauer von anderen zusätzlichen Inhalten, die den gleichen Hauptinhalten zugeordnet werden, die empfohlene zusätzliche Inhalte genannte werden, aufweist und dass der Schritt des Anzeigens das Einfügen von Interessenbereichen in die Darstellung aufweist, die den empfohlenen zusätzlichen Inhalten entsprechen.

10. Verfahren zum Verarbeiten mindestens eines zusätzlichen Inhalts nach Anspruch 8, **dadurch gekennzeichnet, dass**, nachdem der Nutzer zu mindestens einer Gemeinschaft von Nutzern eines sozialen Netzwerks gehört, die Aufzeichnungen in Bezug auf die Konsultation von empfohlenen zusätzlichen Inhalten den Nutzern der mindestens einen Gemeinschaft zugeordnet werden.

11. Vorrichtung zum Verarbeiten mindestens eines zusätzlichen Inhalts, der einem Hauptmultimediainhalt zugeordnet ist, der momentan auf einem Bildschirm eines ersten Endgeräts wiedergegeben wird, umfassend eine Einheit, die dem Nutzer den mindestens einen zusätzlichen Inhalt in Form von einer grafischen Schnittstelle bereitstellt, die einen auswählbaren Interessenbereich aufweist, der auf einem Bildschirm eines zweiten Endgeräts während der Wiedergabe des Hauptinhalts angezeigt wird, wobei die Vorrichtung eine Einheit zum Konsultieren eines zusätzlichen Inhalts aufweist, der auf dem Bildschirm des zweiten Endgeräts bereitgestellt wird, das bei Auswahl durch den Nutzer des Interessenbereichs, der für den zusätzlichen Inhalt repräsentativ ist, eingesetzt werden kann, wobei die Vorrichtung **dadurch gekennzeichnet ist, dass** sie ferner die folgenden Einheiten aufweist:
- Befehlen des Speicherns einer Aufzeichnung in Bezug auf das Konsultieren eines zusätzlichen Inhalts, wobei die Aufzeichnung mindestens eine Kennung des zusätzlichen Inhalts, eine Adresse des zusätzlichen Inhalts, eine Kennung des zugeordneten Hauptinhalts, einen audiovisuellen Pfad des Nutzers und einen Referenzzeitpunkt aufweist;
- Anzeigen einer Darstellung des audiovisuellen Pfades des Nutzers während einer vorbestimmten Zeitdauer, wobei die Darstellung auswählbare Interessenbereiche aufweist, die für die zusätzlichen Inhalte repräsentativ sind, die den gespeicherten Aufzeichnungen zugeordnet sind, die einen Referenzzeitpunkt aufweisen, der in der vorbestimmten Zeitdauer enthalten ist, wobei ein Interessenbereich mit einer Information gekennzeichnet ist, die für den Hauptinhalt repräsentativ ist, dem er zugeordnet ist,
wobei die Einheiten zum Speichern und Anzeigen ausgebildet sind, um ein Verfahren zum Verarbeiten nach einem der Ansprüche 1 bis 10 umzusetzen.

12. Endgerät, umfassend mindestens einen Bildschirm und ein Anschlussmodul an ein Telekommunikationsnetzwerk, **dadurch gekennzeichnet, dass** es ferner eine Vorrichtung zum Verarbeiten eines zusätzlichen Inhalts, der einem Hauptmultimediainhalt zugeordnet ist, der momentan auf einem Bildschirm eines ersten Endgeräts wiedergegeben wird, nach Anspruch 11 aufweist.

13. Computerprogramm, das Anweisungen für die Ausführung des Verfahrens zum Verarbeiten nach einem der Ansprüche 1 bis 10 aufweist, wenn dieses Programm von einem Prozessor ausgeführt wird.

## Claims

1. Method for processing at least one additional item of content associated with a main item of multimedia content during rendering on a screen of a first terminal, said method comprising a step of making said at least one additional item of content available to the user in the form of a graphical interface comprising a selectable area of interest, displayed on a screen of a second terminal during the rendering of the main item of content and, upon the user selecting the area of interest representing said additional item of content, a step of consulting said additional item of content on the screen of the second terminal, said method being **characterized in that** it further comprises the following steps:
- ordering the storage of a recording relating to the consultation of said additional item of content, said recording comprising at least one identifier of the additional item of content, an address of said additional item of content, an identifier of the associated main item of content, a consultation clickstream and a reference time;
- ordering the display of a representation of the consultation clickstream of the user for a predetermined time period, said representation comprising selectable areas of interest, representing the additional items of content associated with the stored recordings comprising a reference time included in the predetermined time period, an area of interest being tagged with an item of information representing the main item of content with which it is associated,
wherein the storage of the recording relating to the consultation of the additional item of content and the consultation clickstream relate to a consultation history over the predetermined time period.

2. Method for processing at least one additional item of multimedia content according to Claim 1, **characterized in that** the tagged areas of interest of additional items of multimedia content, which areas are tagged with an item of information representing one and the same main item of content, are grouped together into one and the same area of interest of said representation.

3. Method for processing at least one additional item of multimedia content according to either of Claims 1 and 2, **characterized in that** the areas of interest of consulted additional items of content are arranged along a time axis representing the predetermined time period, in an order according to the reference time associated with said additional item of content.

4. Method for processing at least one additional item of content according to one of Claims 1 to 3, wherein an additional item of content is associated with a metadatum and wherein the availability of the additional item of content on the second terminal is triggered following the detection of an appearance of said metadatum during the rendering of the main item of content on the first terminal, said method being **characterized in that** the stored recording further comprises said metadatum and **in that** the display step further comprises the tagging of an area of interest with an item of information representing the metadatum with which it is associated.

5. Method for processing at least one additional item of content according to one of the preceding claims, **characterized in that** the reference time belongs to a group comprising at least:
- a start time of the main item of content;
- an end time of the main item of content;
- a time at which the additional item of content is made available;
- a time of consultation of the additional item of content.

6. Method for processing an additional item of content according to Claims 4 and 5, **characterized in that** the group further comprises a time of appearance of said at least one metadatum triggering the additional item of content.

7. Method for processing at least one additional item of content according to Claim 4, **characterized in that**, said at least one metadatum belonging to a thematic group comprising a plurality of metadata, the storage ordering step comprises the storage of an identifier of said thematic group in the recording and the display step comprises the tagging of the areas of interest that are associated with metadata of one and the same thematic group with an item of information representing this group and the grouping together of the areas of interest of additional items of content that are associated with one and the same theme in one and the same region of interest of the representation.

8. Method for processing at least one additional item of content according to one of the preceding claims, **characterized in that** the recording further comprises a user identifier.

9. Method for processing at least one additional item of content according to Claim 8, **characterized in that** it comprises a step of obtaining recordings relating to the consultation, by other users over the predetermined time period, of other additional items of content that are associated with the same main items of content, referred to as recommended additional items of content, and **in that** the display step comprises the insertion of areas of interest corresponding to said recommended additional items of content into the representation.

10. Method for processing at least one additional item
of content according to Claim 8, **characterized in that**, the user belonging to at least one community of users on a social network, the recordings relating to the consultation of recommended additional items of content are associated with users of said at least one community.

11. Device for processing at least one additional item
of content associated with a main item of multimedia content during rendering on a screen of a first terminal, comprising a unit for making said at least one additional item of content available to the user in the form of a graphical interface comprising a selectable area of interest, displayed on a screen of a second terminal during the rendering of the main item of content, said device comprising a unit for consulting an additional item of content made available on the screen of the second terminal capable of being implemented upon the user selecting the area of interest representing said additional item of content,
said device being **characterized in that** it further comprises the following units:
- for ordering the storage of a recording relating to the consultation of an additional item of content, said recording comprising at least one identifier of the additional item of content, an address of said additional item of content, an identifier of the associated main item of content, an audiovisual clickstream of the user and a reference time;
- for displaying a representation of the audiovisual clickstream of the user for the predetermined time period, said representation comprising selectable areas of interest, representing the additional items of content associated with the stored recordings comprising a reference time included in the predetermined time period, an area of interest being tagged with an item of information representing the main item of content with which it is associated,
wherein the storage and display units are arranged to implement a processing method according to any one of Claims 1 to 10.

12. Terminal comprising at least one screen and a
module for connecting to a telecommunication network, **characterized in that** it further comprises a device for processing an additional item of multimedia content associated with a main item of multimedia content being rendered on a screen of a first terminal, according to Claim 11.

13. Computer program comprising instructions for
implementing the processing method according to any one of Claims 1 to 10 when this program is run by a processor.
